# EUROPEAN PATENT APPLICATION

(11) **EP 1 788 557 A2**
(43) Date of publication of application: **23.05.2007**
(21) Application number: 06123852.3
(22) Date of filing: 10.11.2006
(51) Int. Cl.: G11B 5/54, G11B 21/22

(54) **Hard disk drive and method of fabricating the same**

(30) Priority: 22.11.2005 KR 20050111997
(71) Applicant: Samsung Electronics Co., Ltd., Suwon-si, Gyeonggi-Do (KR)
(72) Inventor: Kim, Do-wan 204-1404,Haenglim Maeul,, Hwaseong-si Gyeonggi-do (KR); Jeong, Ki-tag 212-1802,Sinyeongtong Hyundai Apt., Gyeonggi-do (KR); Jeong, Woo-cheol 102-1402 Samsung Raemian Apt. 34, anyang-si,Gyeonggi-do (KR)
(74) Representative: Zimmer, Franz-Josef

(57) **Abstract**

Provided are a hard disk drive (100) and a method of fabricating the same. The hard disk drive includes: a base member (101) and a cover member (105) of which outer circumferences are combined with each other and which form an internal space; an actuator (120) mounted on the base member to be pivoted; a voice coil motor (VCM) (140) including a lower VCM block (141) and an upper VCM block (150) separated from each other so that a rear portion of the actuator is interposed therebetween; and a crash stopper (160) colliding with the rear portion and restricting a pivot range of the actuator, wherein an upper-end of the crash stopper is accommodated in the upper VCM block so that a location change of the upper VCM block caused by an external disturbance is prevented.

## Description

### BACKGROUND OF THE INVENTION

### 1. Field of the Invention

The present invention relates to a hard disk drive, and more particularly, to a structure of a voice coil motor (VCM) for fixing an upper VCM block and a lower VCM block so that the upper VCM block is disposed at a right position with respect to the lower VCM block.

### 2. Description of the Related Art

A hard disk drive (HDD), one of the auxiliary memory devices used in a computer, an MP3 player, and a mobile phone, etc., records data on a disk, i.e., a storage medium or reproduces the data recorded on the disk using an actuator having a magnetic head. The actuator is mounted on a base member and pivots clockwise or counterclockwise so that the magnetic head can search a location where data is to be recorded on the disk or a location where the data is recorded in order to reproduce the data. The actuator is driven by an electromagnetic force generated by an interaction between a current input to a VCM coil at a rear portion of the actuator and a magnetic field formed by a magnet of the VCM.

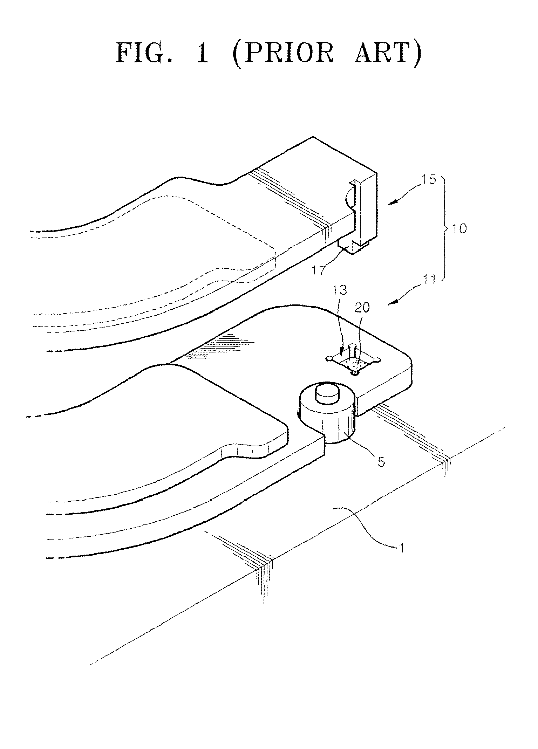

FIG. 1 is an exploded perspective view partially showing an example of a conventional VCM 10. Referring to FIG. 1, the VCM 10 includes a lower VCM block 11 and an upper VCM block 15 separated from each other so that the rear portion of the actuator (not shown) can be interposed between the lower VCM block 11 and the upper VCM block 15. The lower VCM block 11 is mounted on a base member 1. At least one combining protrusion 17 is disposed in the upper VCM block 15, and at least one combining groove 13 that accommodates the combining protrusion 17 is disposed in the lower VCM block 11. In order to fix the upper VCM block 15 in the lower VCM block 11, the lower VCM block 11 and the upper VCM block 15 are combined with each other by placing an adhesive 20 in the combining groove 13 and inserting the combining protrusion 17 in the combining groove 13 when assembling the VCM 10. Reference numeral 5 denotes a crash stopper mounted on the base member 1 so as to restrict a pivot range of the actuator (not shown).

However, it is difficult to automatize an operation of assembling the VCM 10 using the adhesive 20 for mass production and mounting the actuator (not shown). Consequently, the hard disk drive assembly productivity is low.

### SUMMARY OF THE INVENTION

The present invention provides a hard disk drive (HDD) in which an upper voice coil motor (VCM) block of a VCM is fixed without using an adhesive, and a method of fabricating the same.

The present invention also provides a hard disk drive (HDD) in which an upper voice coil motor (VCM) block of a VCM is fixed using a crash stopper for restricting a pivot range of an actuator, and a method of fabricating the same.

An object of the present invention is to improve a hard disk and a corresponding method of fabricating same, such that another voice coil motor block of a voice coil motor can be fixed without using an adhesive and simultaneously a pivot range of an actuator is restricted.

This object is solved by a hard disk drive according to claim 1 or a method of fabricating such a hard disk drive according to claim 10.

Advantageous embodiments of the invention are disclosed by the subclaims.

### BRIEF DESCRIPTION OF THE DRAWINGS

The above and other features and advantages of the present invention will become more apparent by describing in detail exemplary embodiments thereof with reference to the attached drawings in which:
FIG. 1 is an exploded perspective view partially showing an example of a conventional voice coil motor (VCM);
FIG. 2 is a plane view of a hard disk drive (HDD) according to an embodiment of the present invention;
FIG. 3 is an exploded perspective view partially showing a VCM illustrated in FIG. 2; and
FIG. 4 is a cross-sectional view of the VCM taken along line IV-IV of FIG. 3.

### DETAILED DESCRIPTION OF THE INVENTION

The present invention will now be described more fully with reference to the accompanying drawings, in which exemplary embodiments of the invention are shown.

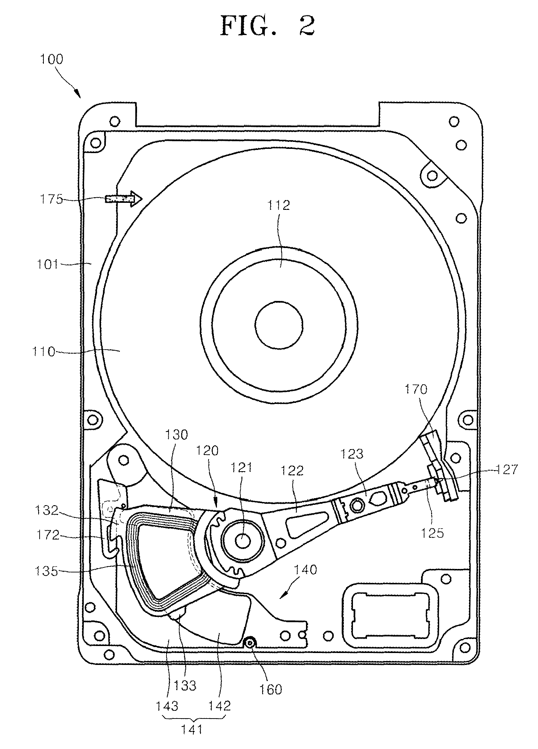

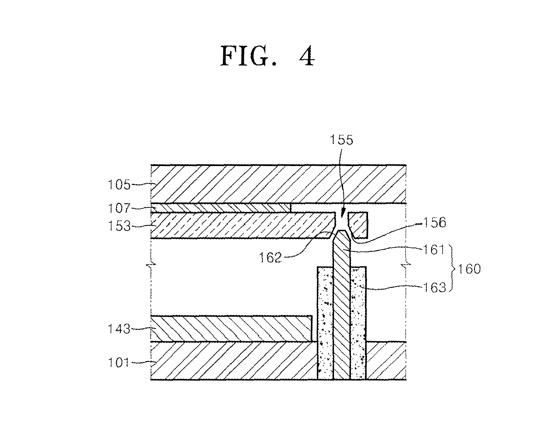

FIG. 2 is a plane view of a hard disk drive (HDD) 100 according to an embodiment of the present invention. Referring to FIG. 2, the hard disk drive (HDD) 100 includes a spindle motor 112, a disk 110 mounted on the spindle motor 112, an actuator 120 that moves a magnetic head for recording and reproducing data to a predetermined location of the disk 110, and a voice coil motor (VCM) 140 for pivoting the actuator 120 inside a base member 101 and a cover member 105 (see FIG. 4), which are combined with each other. The actuator 120 includes a swing arm 122 combined with a pivot center 121 disposed on the base member 101 of the HDD 100 to be rotated, and a suspension 153 installed on a front-end of the swing arm 122 and supporting a slider 125 on which a slider 125 is mounted to be elastically biased toward the surface of the disk 110. A VCM coil 135 is wound around a rear portion 130 of the actuator 120.

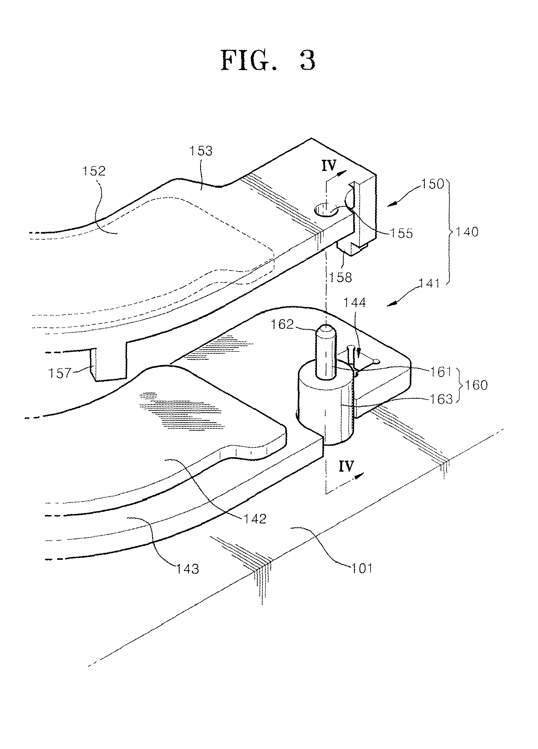

The VCM 140 includes a lower magnet 142 and an upper magnet 152 (see FIG. 3) disposed below and above the VCM coil 135, respectively, to face the VCM coil 135. The lower magnet 142 and the upper magnet 152 are attached and supported to a lower yoke 143 and an upper yoke 153 (see FIG. 3). The lower magnet 142 and the lower yoke 143 constitute a lower VCM block 141, and the upper magnet 152 and the upper yoke 153 constitute an upper VCM block 150 (see FIG. 3). The lower VCM block 141 and the upper VCM block 150 are assembled with the rear portion 130 of the actuator 120 interposed therebetween, thereby forming the VCM 140

According to the Flemming's left hand rule, the actuator 120 pivots by an electromagnetic force generated by an interaction between a current which is input to the VCM coil 135 and a magnetic field formed by the upper and lower magnets 142 and 152. When the HDD 100 is turned on and the disk 110 starts rotating, the actuator 120 pivots counterclockwise, and the slider 125, on which the magnetic head is mounted, moves onto a recording surface of the disk 110. On the contrary, if the HDD 100 is turned off and the disk 110 stops rotating, the actuator 120 pivots clockwise and the slider 125 deviates from surface of the disk 110. In this case, the slider 125 is parked on a ramp 170 disposed on an outer circumference of the disk 110. Specifically, an end-tap 127 formed on the front-end of the suspension 123 is lifted on the ramp 170 and parked thereon.

The HDD 100 includes an actuator latch 172. When the HDD 100 stops operating, and the disk 110 stops rotating and the slider 125 is parked on the ramp 170, the actuator latch 172 interferes with a hook 132 of the rear portion 130 of the actuator 120 and locks the actuator 120. Thus, the slider 125 and the disk 110 are prevented from being damaged by an external disturbance. A circulation filter 175 is disposed in one corner of the base member 101 adjacent to the outer circumference of the disk 110. The circulation filter 175 filters foreign substances such as particles contained in an air flow induced by high-speed rotation of the disk 110.

The HDD 100 includes a crash stopper 160 which restricts a counterclockwise pivot range of the actuator 120. The actuator 120 that pivots counterclockwise stops moving when a crash stopper collision part 133 formed in the rear portion 130 of the actuator 120 collides with the crash stopper 160. As such, the actuator 120 and the spindle motor 112 are prevented from colliding with each other because of the external disturbance.

FIG. 3 is an exploded perspective view partially showing the VCM 140 illustrated in FIG. 2, and FIG. 4 is a cross-sectional view of the VCM 140 taken along line IV-IV of FIG. 3.

Referring to FIGS. 3 and 4, the crash stopper 160 includes a pin 161 and a damper 163 which surrounds the outer circumference of the pin 161. The pin 161 is formed of a metal such as stainless steel, and the damper 163 is formed of a shock-absorbing material, such as a rubber, to absorb a shock when colliding with the crash stopper collision part 133 (see FIG. 2). The crash stopper 160 is inserted and mounted on the base member 101, and protrudes more than the lower VCM block 141. However, the crash stopper 160 of the present invention may be formed in one body with the base member 101 or mounted on the lower VCM block 141.

An upper-end of the pin 161 extends toward the upper VCM block 150 and is accommodated in the upper yoke 153. To this end, a through hole 155 is formed in the upper yoke 153. A chamfer 162 of which edge is gently processed is formed on the upper-end of the pin 161 so that the upper-end of the pin 161 can be easily accommodated in the through hole 155. A chamfer 156 of which edge is gently processed to correspond to the chamfer 162 of the pin 161 is formed at a lower side of a through hole 155.

The HDD 100 has a small size, the diameter of the disk 110 is 2.5 inch, and is assembled using a top-down method using an automation production facility to increase productivity. In the top-down method, the lower VCM block 141 is disposed on the base member 101, the actuator 120 is mounted on the base member 101 so that the rear portion 130 of the actuator 120 can be disposed on the lower VCM block 141, and the upper VCM block 150 is disposed on the lower VCM block 141 and the rear portion 130 of the actuator 120.

In order to arrange the upper VCM block 150 with respect to the lower VCM block 141 in the assembling procedure, the upper VCM block 141 includes at least one guide protrusion 158, and the lower VCM block 150 includes the same number of guide groove 144 for accommodating the guide protrusion 158. A chamfer may also be formed in the guide groove 144 so that the guide protrusion 158 can easily come into the guide groove 144. The lower VCM block 141 and the upper VCM block 150 do not need to be combined with each other and thus, an adhesive is not used.

The lower magnet 142 and the upper magnet 152 of the VCM 140 are separated from each by a predetermined distance so that the rear portion 130 of the actuator 120 can be interposed therebetween. The upper VCM block 150 includes at least one spacer 157 directly supported on the lower yoke 143 so that the distance can be maintained.

To improve productivity, reduce production cost, and reduce the weight of the HDD 100, the lower VCM block 141 and the upper VCM block 150 are not combined with each other using a screw. The HDD 100 includes a pressing pad 107 formed of an elastic material attached to an inside of the cover member 105. When the cover member 105 is combined with the base member 101, since the pressing pad 107 presses the upper yoke 153 of the upper VCM block 150 toward the base member 101, the separation of the lower VCM block 141 and the upper VCM block 150 is suppressed.

The upper-end of the pin 161 of the crash stopper 160 fixed on the base member 101 is accommodated in the upper VCM block 150, the guide protrusion 158 of the upper VCM block 150 is accommodated in the guide groove 144 of the lower VCM block 141, and the upper VCM block 150 is pressed by the pressing pad 107 attached to the cover member 105 so that it cannot be separated from the lower VCM block 141. Thus, even when a shock is applied to the HDD 100, the position of the upper VCM block 150 does not change with respect to the base member 101 or the lower VCM block 141.

A method of fabricating the HDD 100 will now be described with reference to FIGS. 2 through 4.

As described above, the HDD 100 is assembled using the top-down method using an automation productivity facility. First, the spindle motor 112 is mounted on the base member 101 and the disk 110 is fixedly combined with the spindle motor 112. In addition, the ramp 170 is mounted on the base member 101 and the crash stopper 160 is inserted on the base member 101. Next, the lower VCM block 141 is disposed on the base member 101. After that, the actuator 120 is mounted on the base member 101 so that the rear portion 130 of the actuator 120 is located on the lower VCM block 141, and the actuator latch 172 is installed. Next, the upper VCM block 150 is disposed on the lower VCM block 141 and the rear portion 130 of the actuator 120.

When the guide protrusion 158 of the upper VCM block 150 is overlapped on the guide groove 144 of the lower VCM block 141 and the upper VCM block 150 is disposed on the lower VCM block 141 and the rear portion 130 of the actuator 120, the guide protrusion 158 is inserted in the guide groove 144, and at the same time, the pin 161 of the crash stopper 160 protruding in an upward direction is inserted through the through hole 155 of the upper VCM block 150.

Next, the circulation filter 175 is mounted to the outer perimeter of the disk 110. The cover member 105 is combined with the base member 101. The pressure pad 107 inside the cover member 105 presses the upper VCM block 150 and it prevents the separation of the upper VCM block 150 and the lower VCM block 141.

As described above, in the HDD according to the present invention, the upper-end of the crash stopper prevents a location change of the upper VCM block caused by an external disturbance such that malfunction and damage of the actuator are prevented.

In addition, since an additional fixing unit for fixing the upper VCM block is not needed, the manufacturing cost of the HDD can be reduced and miniaturization and weight reduction of the hard disk drive are possible.

Furthermore, in the method of fabricating the hard disk drive according to the present invention, an adhesive is not used and top-down assembling can be performed using the automation production facility. Thus, assembly productivity can be improved and manufacturing cost can be reduced.

While this invention has been particularly shown and described with reference to exemplary embodiments thereof, it will be understood by those skilled in the art that various changes in form and details may be made therein without departing from the scope of the invention as defined by the appended claims. For example, the crash stopper of which upper-end is accommodated in the upper VCM block which is the characteristic part of the present invention may limit the clockwise pivot range of the actuator. Therefore, the scope of the invention is defined not by the detailed description of the invention but by the appended claims, and all differences within the scope will be construed as being included in the present invention.

## Claims

1. A hard disk drive (100) comprising:
a base member (101) and a cover member (105) of which outer circumferences are combined with each other to form an internal space;
an actuator (120) mounted on the base member (101) to be pivoted;
a voice coil motor (VCM) (140) including a lower VCM block (141) and an upper VCM block (150) separated from each other so that a rear portion of the actuator is interposed therebetween; and
a crash stopper (160) colliding with the rear portion and restricting a pivot range of the actuator (120),
wherein an upper-end of the crash stopper (160) is accommodated in the upper VCM block (150) to prevent a location change of the upper VCM block caused by an external disturbance.

2. The hard disk drive of claim 1, wherein the crash stopper (160) includes a pin (161) of which upper-end is accommodated in the upper VCM block, and a damper (163) surrounding an outer circumference of the pin (161).

3. The hard disk drive of claim 2, wherein the upper and lower VCM blocks (150,141) include a magnet and a yoke (153,143) supporting the magnet, and
a through hole (155) in which the upper-end of the pin (161) is accommodated is formed in the yoke (153) of the upper VCM block (150).

4. The hard disk drive of claim 3, wherein a chamfer (162) is formed on the upper-end of the pin (161) and a chamfer corresponding to the chamfer (156) of the pin is formed at a lower side of the through hole (155).

5. The hard disk drive of claim 1, wherein the crash stopper (160) is inserted and mounted on the base member (101).

6. The hard disk drive of claim 1, wherein the crash stopper (160) is adapted to restrict a clockwise or counterclockwise pivot range of the actuator (120).

7. The hard disk drive of claim 1, wherein, in order to arrange the upper VCM block with respect to the lower VCM block, the upper VCM block includes at least one guide protrusion (158) and the lower VCM block includes at least one guide groove (144) in which the guide protrusion is accommodated.

8. The hard disk drive of claim 1, wherein the upper VCM block includes at least one spacer (157) supported on the lower VCM block so that a distance between the upper VCM block and the lower VCM block can be maintained.

9. The hard disk drive of claim 1, wherein a pressing pad (107) formed of an elastic material and preventing separation of the lower VCM block (141) and the upper VCM block (150) by pressing the upper VCM block toward the base member (101) is attached to an inside of the cover member (105).

10. A method of fabricating a hard disk drive, the method comprising:
installing a voice coil motor (VCM) (140) including a lower VCM block (141) and an upper VCM block (150) on a base member (101);
mounting an actuator (120) on the base member (101) to be pivoted so that a rear portion of the actuator is interposed between the lower VCM block and the upper VCM block;
forming a crash stopper (160) colliding with the rear portion and restricting a pivot range of the actuator to protrude from the lower VCM block; and
combining a cover member (105) with an outer circumference of the base member (101),
wherein an upper-end of the crash stopper (160) is accommodated in the upper VCM block (150) to prevent a location change of the upper VCM block caused by an external disturbance.

11. The method of claim 10, wherein the installing of the VCM and mounting of the actuator comprises:
disposing the lower VCM block (141) on the base member (101);
mounting the actuator (120) on the base member (101) so that the rear portion is disposed on the lower VCM block; and
disposing the upper VCM block (150) on the lower VCM block (141) and the rear portion.

12. The method of claim 11, wherein the crash stopper (160) protrudes from the lower VCM block (141) before disposing the upper VCM block (150), and the upper VCM block is disposed on the lower VCM block and the rear portion so that the upper-end of the crash stopper is accommodated in the upper VCM block.

13. The method of claim 10, wherein the crash stopper (160) is inserted and mounted on the base member (101).

14. The method of claim 10, wherein a pressing pad (107) is attached to an inside of the cover member (105) and the cover member is combined with the outer circumference of the base member (101) so that the pressing pad presses the upper VCM block toward the base member so that the separation of the lower VCM block and the upper VCM block is prevented.
